# EUROPEAN PATENT APPLICATION

(11) **EP 4 702 895 A1**
(43) Date of publication of application: **04.03.2026**
(21) Application number: 23936405.2
(22) Date of filing: 06.11.2023
(51) Int. Cl.: A47J 36/38, A47J 27/04, A47J 37/06

(54) **MOISTURE REMOVAL ASSEMBLY FOR COOKING APPLIANCE AND COOKING APPLIANCE**

(30) Priority: 06.05.2023 CN 202310508417
(71) Applicant: Guangdong Midea Kitchen Appliances Manufacturing Co., Ltd., Foshan, Guangdong 528311 (CN)
(72) Inventor: SHOU, Jun, Foshan, Guangdong 528311 (CN); HU, Guangchuan, Foshan, Guangdong 528311 (CN); ZHU, Zhifei, Foshan, Guangdong 528311 (CN); PENG, Yi, Foshan, Guangdong 528311 (CN); HUANG, Hua, Foshan, Guangdong 528311 (CN)
(74) Representative: RGTH
(86) International application number: PCT/CN2023/129993
(87) International publication number: WO 2024/230101

(57) **Abstract**

A moisture removal assembly (100) for a cooking appliance (200) and a cooking appliance (200) are provided and belong to the technical field of kitchen electrical appliances. The moisture removal assembly (100) includes a bearing member (110), a driving member (120), a push rod (130), and an elastic member (140). The bearing member (110) is connected to the cooking appliance (200). The driving member (120) is slidably mounted on the bearing member (110). The push rod (130) is connected to the driving member (120). The driving member (120) is configured to drive the push rod (130) to move towards an oven door (210) of the cooking appliance (200) to open the oven door (210). The elastic member (140) is mounted on the bearing member (110) along a sliding path of the driving member (120) and connected to the driving member (120).

## Description

### CROSS-REFERENCE TO RELATED APPLICATIONS

This application is based on and claims a priority to Chinese Patent Application No. 202310508417.8, filed on May 6, 2023, the entire content of which is incorporated herein by reference.

### FIELD

The present disclosure relates to the technical field of kitchen electrical appliances, and in particular, to a moisture removal assembly for a cooking appliance and a cooking appliance.

### BACKGROUND

With steam ovens becoming increasingly popular, users' demands for experiences with functions of the steam ovens such as baking and air frying are on the rise. In order to control a baking humidity, the steam oven is equipped with a moisture removal assembly. An oven door is properly pushed open by this moisture removal assembly to form a gap, which allows moisture inside the oven to be discharged. When the moisture removal assembly pushes the oven door open, in the event that the user is not familiar with this moisture removal function, the user may forcefully close the oven door, causing damage to the moisture removal assembly or the oven door.

### SUMMARY

The present disclosure aims to at least solve one of the technical problems existing in the prior art. To this end, the present disclosure provides a moisture removal assembly for a cooking appliance and a cooking appliance. A driving member is slidable. In this way, when a push rod is in a protruding state, a user closing a door will not cause damage to the moisture removal assembly or the oven door.

In a first aspect, the present disclosure provides a moisture removal assembly for a cooking appliance. The moisture removal assembly comprises: a bearing member connected to the cooking appliance; a driving member slidably mounted on the bearing member; a push rod connected to the driving member, the driving member being configured to drive the push rod to move towards an oven door of the cooking appliance, to enable the oven door to be pushed open; and an elastic member mounted on the bearing member along a sliding path of the driving member and connected to the driving member.

According to the moisture removal assembly of the present disclosure, with the driving member being slidably mounted on the bearing member, when the push rod is in the protruding state, the user will push the driving member to slide when closing the door, avoiding the damage to the moisture removal assembly or the oven door. Moreover, after the user releases the hand, the elastic member pushes the driving member out again, causing the oven door to be reopened for moisture removal. Moreover, the elastic member may achieve a position limiting effect to prevent the driving member from moving randomly, allowing the driving member not to slide when the push rod is driven to push the door.

According to an embodiment of the present disclosure, the bearing member comprises a housing having a cavity and a first opening in communication with the cavity. The driving member is located in the cavity and is configured to drive the push rod to protrude through the first opening.

According to an embodiment of the present disclosure, the housing further has a snap groove and a fixing hole that surround the first opening, and the moisture removal assembly further comprises: a mounting cover configured to be mounted on the cooking appliance. The mounting cover has a first through hole, a second through hole, and a first snap. The first snap is snapped in the snap groove. The first through hole is aligned to the first opening, and the second through hole is aligned to the fixing hole. The fixing hole is configured to receive a screw for connecting the cooking appliance.

According to an embodiment of the present disclosure, the housing comprises: a lower cover having a sliding groove and a first position-limiting structure, the driving member being disposed in the sliding groove; and an upper cover having a second position-limiting structure. The cavity is formed by the upper cover and the lower cover fitted onto the lower cover. The sliding groove is formed in the cavity, and the first position-limiting structure and the second position-limiting structure cooperate to form a locking structure to prevent separation of the upper cover from the lower cover.

According to an embodiment of the present disclosure, the driving member is provided with an insertion piece, the upper cover and/or the lower cover has a second opening, and the insertion piece extends to the outside through the second opening when the driving member slides to any position.

According to an embodiment of the present disclosure, the driving member is provided with a fixing portion, and the upper cover and/or the lower cover is formed with an accommodation portion protruding outwards at a part of the upper cover and/or the lower cover. The fixing portion is placed in the accommodation portion when the driving member slides to any position.

According to an embodiment of the present disclosure, the first position-limiting structure comprises a plurality of locking members, the plurality of locking members having a socket. The second position-limiting structure comprises a plurality of second snaps formed at a side surface of the upper cover. The plurality of second snaps is snapped in the socket when the upper cover is fitted onto the lower cover.

According to an embodiment of the present disclosure, the driving member is a wax motor.

According to an embodiment of the present disclosure, the elastic member is a spring.

In a second aspect, the present disclosure provides a cooking appliance, comprising the moisture removal assembly according to any one of the above embodiments. The moisture removal assembly is mounted on an outer side of a chamber of the cooking appliance and located at an end of an openable/closable side of an oven door.

According to the cooking appliance of the present disclosure, the oven door is capable of being pushed open by the moisture removal assembly when moisture removal is needed. Moreover, in a state where the door is pushed open, when the user closes the door, the driving member is pushed to slide. In this way, the damage to the moisture removal assembly or the oven door is avoided. Moreover, after the user releases the hand, the elastic member pushes the driving member out again, allowing the oven door to be reopened for moisture removal.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the description of embodiments taken in conjunction with the accompanying drawings, in which:
FIG. 1 is a first schematic structural view of a moisture removal assembly provided according to an embodiment of the present disclosure.
FIG. 2 is a second schematic structural view of a moisture removal assembly provided according to an embodiment of the present disclosure.
FIG. 3 is a schematic exploded view of a moisture removal assembly provided according to an embodiment of the present disclosure.
FIG. 4 is a schematic structural view of a mounting cover provided according to an embodiment of the present disclosure.
FIG. 5 is a first schematic structural view of a cooking appliance provided according to an embodiment of the present disclosure.
FIG. 6 is a second schematic structural view of a cooking appliance provided according to an embodiment of the present disclosure.
FIG. 7 is a third schematic structural view of a cooking appliance provided according to an embodiment of the present disclosure.
FIG. 8 is a fourth schematic structural view of a cooking appliance provided according to an embodiment of the present disclosure.

### Reference numerals:

moisture removal assembly 100, bearing member 110, first opening 111, snap groove 112, fixing hole 113, driving member 120, insertion piece 121, fixing portion 122, push rod 130, elastic member 140, mounting cover 150, first through hole 151, second through hole 152, first snap 153, lower cover 160, sliding groove 161, first position-limiting structure 162, socket 163, locking member 164, upper cover 170, second position-limiting structure 171, second snap 172, second opening 180, accommodation portion 190;
cooking appliance 200, oven door 210, front panel 220.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

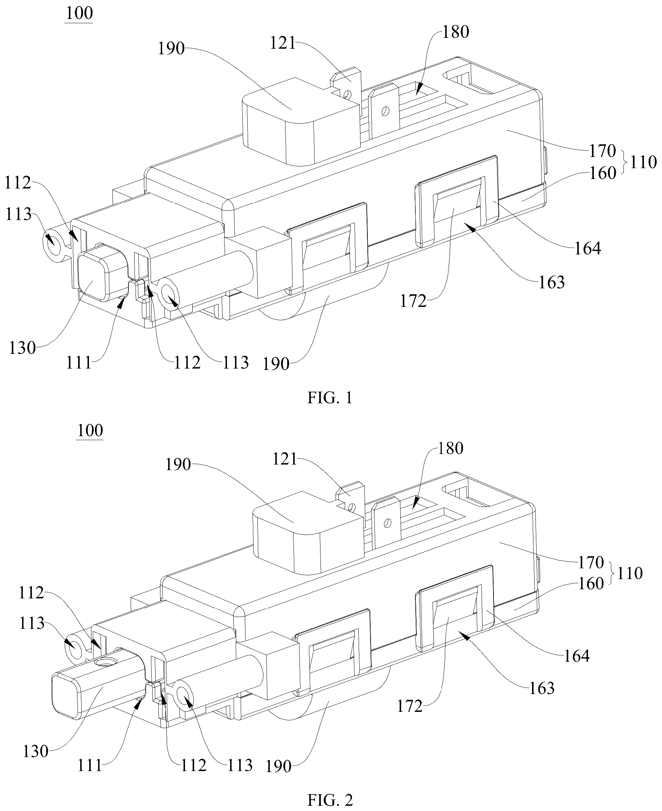

With reference to FIG. 1 to FIG. 3, an embodiment of the present disclosure provides a moisture removal assembly 100 for a cooking appliance 200.

In this embodiment, the moisture removal assembly 100 comprises a bearing member 110, a driving member 120, a push rod 130, and an elastic member 140. The bearing member 110 is connected to the cooking appliance 200. The driving member 120 is slidably mounted on the bearing member 110. The push rod 130 is connected to the driving member 120. The driving member 120 is configured to drive the push rod 130 to move towards an oven door 210 of the cooking appliance 200 to enable the oven door 210 to be pushed open. The elastic member 140 is mounted on the bearing member 110 along a sliding path of the driving member 120 and connected to the driving member 120.

FIG. 1 and FIG. 2 illustrate the moisture removal assembly 100 in different driving states, respectively. The driving state refers to a state in which the push rod 130 is driven by the driving member 120 to protrude. FIG. 2 may illustrate a state where the moisture removal assembly 100 is pushed out to its limit position.

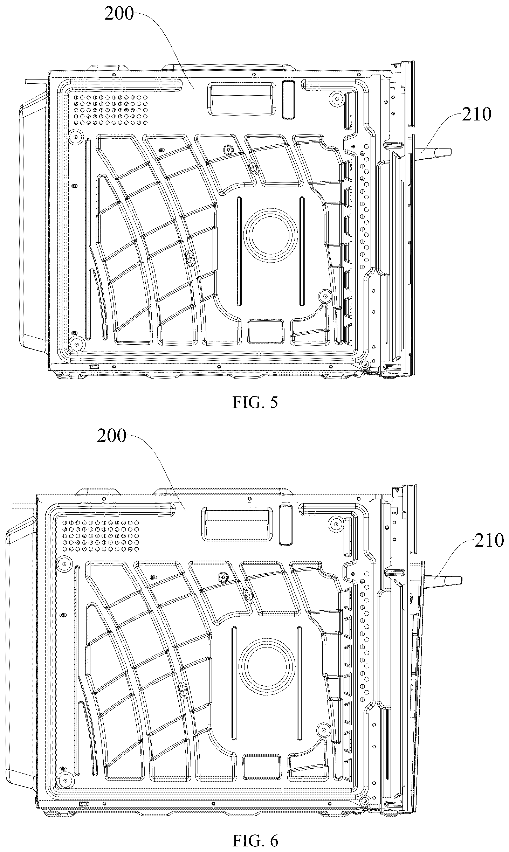

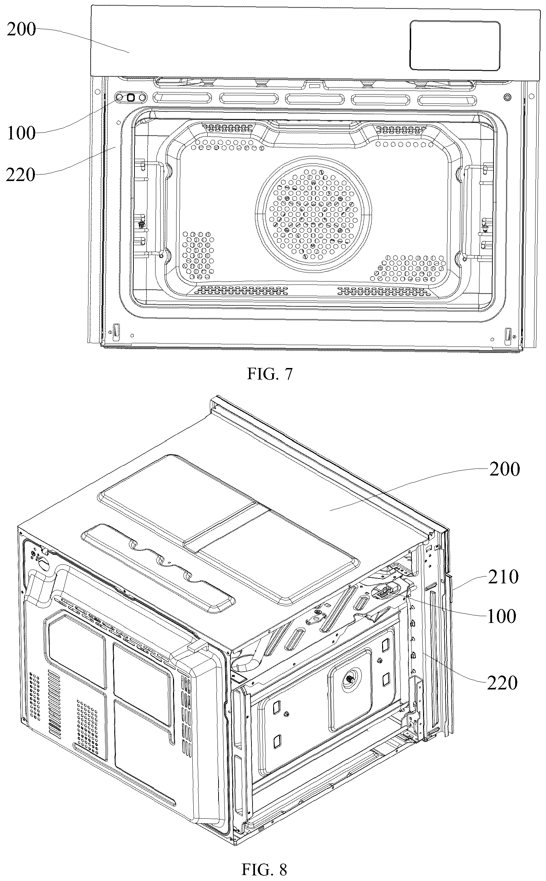

With reference to FIG. 5 to FIG. 8, in some embodiments, the cooking appliance 200 comprises a body and an oven door 210, and the oven door 210 may be fitted onto a front panel 220 of the body. The moisture removal assembly 100 may be mounted at a rear side of the front panel 220 and located outside an oven chamber of the cooking appliance 200. The front panel 220 has a through opening, and the push rod 130 protrudes from the through opening under the driving of the driving member 120 to be in contact with the oven door 210. Then, as the push rod 130 continues to protrude, the oven door 210 is pushed open to form a gap, through which the oven chamber is in communication with the outside. FIG. 5 illustrates a state of the oven door 210 when the moisture removal assembly 100 is not in operation, and FIG. 6 illustrates a state in which the oven door 210 is pushed open when the moisture removal assembly 100 is in operation.

The bearing member 110 is configured to provide support for the driving member 120 and the elastic member 140, and may form a fixed connection with the front panel 220 of the cooking appliance 200 by means of bolts or the like. The bearing member 110 may be made of materials such as metal or plastic.

In some embodiments, the driving member 120 may slide in a straight line on the bearing member 110, and its sliding path is a straight line segment. This straight line segment may be arranged in a front-rear direction of the cooking appliance 200, and an initial position of the driving member 120 may be located at a frontmost end of this straight line segment. The frontmost end refers to a position on the straight line segment that is closest to the oven door 210. Correspondingly, the elastic member 140 may be disposed at a rear side of the driving member 120.

It can be understood that since a fixed connection between the driving member 120 and the bearing member 110 is not formed, in a state where the oven door 210 is pushed open by the push rod 130, if a user forcefully closes the door, a thrust force applied by the oven door 210 on the push rod 130 is transmitted to the driving member 120, which in turn allows the driving member 120 to slide and the elastic member 140 to be compressed, relieving a force applied by the user when closing the door. Moreover, after the user releases the hand, the elastic member 140 expands, driving the driving member 120 and the push rod 130 to re-protrude. In this way, the oven door 210 is pushed open to form a gap.

In some embodiments, an end of the elastic member 140 may be in abutment with the rear side of the driving member 120, and the other end of the elastic member 140 may be connected to the bearing member 110. When the driving member 120 is in an initial position, the elastic member 140 may be in a compressed state, which applies a predetermined elastic force to the driving member 120 to prevent the driving member 120 from moving randomly. When the push rod 130 is driven by the driving member 120 and the oven door 210 is pushed open, the driving member 120 is also subjected to a reaction force from the oven door 210. Accordingly, by using the elastic member 140 to apply a predetermined elastic force to the driving member 120 at the initial position, the driving member 120 can be prevented from sliding under this reaction force, ensuring that the oven door 210 can be opened normally.

**In** some embodiments, the elastic member 140 may be a spring. The spring may be a metal spring or a rubber spring. In other embodiments of the present disclosure, the elastic member 140 may also be other elements having elasticity.

The driving member 120 serves to provide a driving force for linear movement to drive the push rod 130. The driving member 120 may drive the push rod 130 to protrude outwards in a straight line so that the oven door 210 is pushed open. Alternatively, the driving member 120 may drive the push rod 130 to retract inwards in a straight line to close the oven door 210. The driving member 120 may be a linear motion module such as a stepper motor or a motor, which is not limited in this embodiment.

**In** some embodiments, the driving member 120 may be a wax motor. The wax motor consists of a positive temperature coefficient (PTC) thermistor that is mounted on a sealed container filled with solid wax. When the solid wax is heated to a controllable temperature by an energized thermistor, the solid wax melts and expands, driving a spring-loaded piston outwards. This piston may pull a load inwards or push the load outwards, depending on the orientation of a container inside a wax motor housing and a structure of the spring. When the thermistor is de-energized, liquid wax cools, and the piston is returned to its initial position under the action of the spring. The wax motor operates smoothly, at a relatively slow speed, and with high reliability.

**In** some embodiments, the cooking appliance 200 further comprises a main controller electrically connected to the driving member 120. The main controller may transmit a control signal to the driving member 120 according to a program run by the main controller, to control the driving member 120 to drive the push rod 130 to protrude or retract.

As an example, the operation process of the moisture removal assembly 100 in this embodiment may be as follows. After the user operates the cooking appliance 200 to select a menu with a humidity control function for cooking, food ingredients are put in, and cooking is started. A temperature of the oven chamber is detected by the main controller, and when the temperature rises to a set temperature, the driving member 120 is controlled to be energized. After the driving member 120 is energized, the push rod 130 is pushed by the driving member 120 to protrude. The push rod 130 protrudes to be in contact with the oven door 210 so that the oven door 210 is pushed open, and a gap is formed between the oven chamber and the oven door 210. The moisture in the oven chamber is discharged out of the oven chamber through the gap. Meanwhile, dry air outside the oven chamber enters the oven chamber for exchange, achieving the purpose of reducing a humidity in the oven chamber. In the entire process of the door being pushed by the driving member 120, a heating component in the oven chamber operates continuously to ensure that the temperature in the oven chamber satisfies the cooking requirements. When the cooking process reaches T minutes before the end (T is determined according to different food ingredients and menus), the driving member 120 is controlled by the main controller to be de-energized, and the push rod 130 retracts slowly after the driving member 120 is de-energized. When the cooking is completed, the oven door 210 is completely closed. The door may be opened by the user to take out the cooked food.

According to the moisture removal assembly 100 of the present disclosure, the driving member 120 is slidably mounted on the bearing member 110. In the case that the push rod 130 is in the protruding state, if the user closes the door, the driving member 120 is pushed to slide, avoiding damage to the moisture removal assembly 100 or the oven door 210. Moreover, after the user releases the hand, the driving member 120 is pushed out again by the elastic member 140, allowing the oven door 210 to be reopened for moisture removal. Meanwhile, the elastic member 140 may achieve a position limiting effect to some extent to prevent the driving member 120 from moving randomly, allowing the driving member 120 not to slide when the push rod 130 is driven to push the door.

In some embodiments, the bearing member 110 may comprise a housing having a cavity and a first opening 111 in communication with the cavity. The driving member 120 is located in the cavity and is configured to drive the push rod 130 to protrude through the first opening 111.

In this embodiment, the first opening 111 is disposed towards the oven door 210, and the driving member 120 is located in the cavity. The push rod 130 may be located in the cavity when the push rod 130 is not driven by the driving member 120, or may partially protrude from the first opening 111 when not driven by the driving member 120. The housing covers the driving member 120, which can well protect the driving member 120 and the push rod 130, and also prevent external factors (such as dust) from affecting the movement of the driving member 120 and the movement of the push rod 130.

In other embodiments, the bearing member 110 may comprise a support, and the driving member 120 may be slidably mounted on the support. Since a box of the cooking appliance 200 may protect the moisture removal assembly 100 to some extent, in a good use environment (such as an environment with little dust), the housing may not be used to cover the driving member 120. The support may have a hollowed-out structure, which uses less material for production and reduces costs.

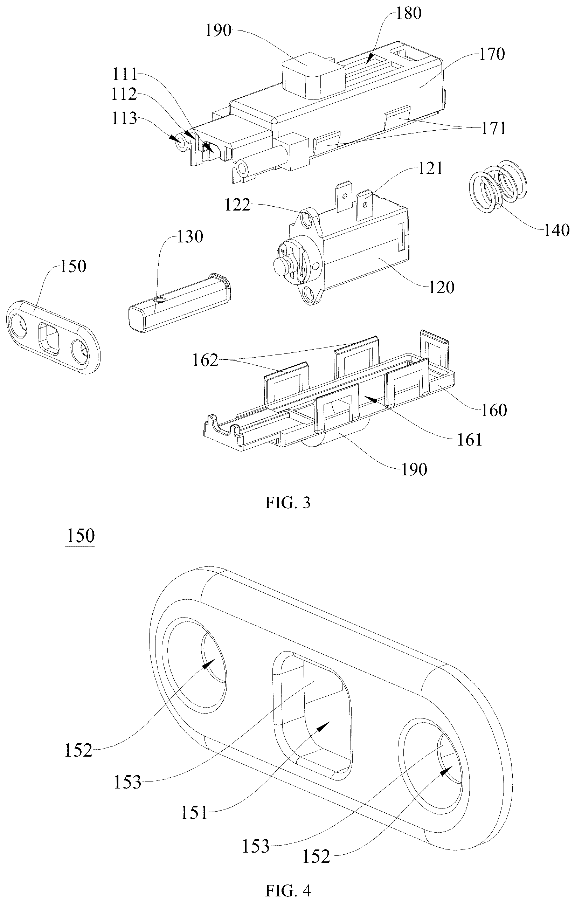

With reference to FIG. 3 and FIG. 4, in some embodiments, the housing further has a snap groove 112 and a fixing hole 113 that surround the first opening 111. The moisture removal assembly 100 may further comprise a mounting cover 150 mounted on the cooking appliance 200. The mounting cover 150 has a first through hole 151, a second through hole 152, and a first snap 153. The first snap 153 is snapped in the snap groove 112. The first through hole 151 is aligned to the first opening 111, and the second through hole 152 is aligned to the fixing hole 113. The fixing hole 113 is configured to receive a screw for connecting the cooking appliance 200.

In some embodiments, at least two snap grooves 112 and at least two fixing holes 113 are provided. The number of second through holes 152 corresponds to the number of fixing holes 113, and the number of first snaps 153 corresponds to the number of snap grooves 112. The housing is connected to the mounting cover 150 through the snap grooves 112 and the first snaps 153, and the housing is connected to the cooking appliance 200 through the fixing hole 113.

The alignment of the first through hole 151 with the first opening 111 may ensure that the push rod 130 when protruding may pass through the aligned first through hole 151 and first opening 111 in such a way that the push rod is in contact with the oven door 210, thereby opening the oven door 210. One of the second through holes 152 is aligned to a corresponding one of the fixing holes 113, which ensures that a screw may pass through a corresponding second through hole of the second through holes 152 and a corresponding fixing hole of the fixing holes 113.

An end of the first snap 153 may be provided with a claw. After the first snap 153 extends into the snap groove 112, the claw hooks the snap groove 112 to form a fixed connection between the first snap 153 and the snap groove 112. Therefore, after the mounting cover 150 is mounted on the cooking appliance 200 and then the housing is mounted on the mounting cover 150, the housing is not easy to fall off. A non-detachable snap connection structure may be formed by the first snap 153 and the snap groove 112 to ensure a firm connection between the housing and the mounting cover 150.

As an example, the mounting process of the moisture removal assembly 100 may be as follows. First, the driving member 120, the push rod 130, and the elastic member 140 are mounted in the housing. Then, the mounting cover 150 is embedded into a cavity front panel 220 of the cooking appliance 200. Then, the housing is mounted on the mounting cover 150 for pre-fixation. At this time, the first snap 153 is snapped in the snap groove 112. Finally, the screw passes through the second through hole 152 and the fixing hole 113, and is fastened to complete the mounting. The housing may be pre-fixed on the front panel 220 by the mounting cover 150, which facilitates the subsequent screw fastening operation and makes the mounting process more convenient.

In some embodiments, the housing may comprise a lower cover 160 and an upper cover 170. The lower cover 160 has a sliding groove 161 and a first position-limiting structure 162, and the driving member 120 is disposed in the sliding groove 161. The upper cover 170 has a second position-limiting structure 171. The cavity is formed by the upper cover 170 and the lower cover 160 when the upper cover 170 is fitted onto the lower cover 160. The sliding groove 161 is formed in the cavity, and the first position-limiting structure 162 and the second position-limiting structure 171 cooperate to form a locking structure to prevent separation of the upper cover 170 from the lower cover 160.

In some embodiments, the sliding groove 161 may be arranged in a straight line. The driving member 120 may be located at one end of the sliding groove 161, and the elastic member 140 is provided between the other end of the sliding groove 161 and the driving member 120. When the driving member 120 is pushed by an external force, the driving member 120 slides towards the other end of the sliding groove 161 and compresses the elastic member 140.

In this embodiment, the housing adopts a design having the lower cover 160 and the upper cover 170 that are separated from each other. During the mounting process, the driving member 120, the push rod 130, and the elastic member 140 may be mounted on the upper cover 170, and then the upper cover 170 is fitted onto the lower cover 160, which facilitates the mounting.

In some embodiments, the driving member 120 is provided with an insertion piece 121, and the upper cover 170 and/or the lower cover 160 has a second opening 180. The insertion piece 121 extends to the outside through the second opening 180 when the driving member 120 slides to any position.

It should be noted that the insertion piece 121 is used for connection to a power source. The insertion piece 121 may comprise two metal sheets that are connected to a positive electrode and a negative electrode of the power source, respectively. The two metal sheets may be located at the same side. The second opening 180 is configured to expose the insertion piece 121 to facilitate a connection between the insertion piece 121 and a power cord. A specific position of the second opening 180 corresponds to a position of the insertion piece 121 on the driving member 120. In the case that the insertion piece 121 is located at a side surface of the driving member 120, the second opening 180 is formed at a side surface of the upper cover 170. In the case that the two metal sheets serving as the insertion piece 121 are respectively located at a bottom surface and a top surface of the driving member 120, the second openings 180 are respectively formed at a bottom surface of the lower cover 160 and a top surface of the upper cover 170.

As an example, the two metal sheets serving as the insertion piece 121 are disposed at an upper side of the driving member 120 and extend upwards. The second opening 180 comprises two hollowed-out regions and is formed at the top surface of the upper cover 170. Each hollowed-out region is configured to expose a corresponding metal sheet of the two metal sheets.

In this embodiment, a range of the second opening 180 needs to cover a movement range of the insertion piece 121. The insertion piece 121 may move, with the driving member 120, within the second opening 180, and thus, the sliding of the driving member 120 is not affected. The movement range of the insertion piece 121 may be determined according to the movement position of the driving member 120 and the position of the insertion piece 121 on the driving member 120.

In some embodiments, the driving member 120 is provided with a fixing portion 122, and the upper cover 170 and/or the lower cover 160 is formed with an accommodation portion 190 protruding outwards at a part of the upper cover 170 and/or the lower cover 160. The fixing portion 122 is placed in the accommodation portion 190 when the driving member 120 slides to any position.

It should be noted that the actual purpose of the fixing portion 122 is to fix the driving member 120, and the fixing portion 122 is integrally packaged with the body of the driving member 120. For example, the fixing portion 122 may have a through hole that is used for fastening the bolt. The fixing portion 122 usually protrudes relative to the body of the driving member 120. In order to prevent the fixing portion 122 from limiting the sliding of the driving member 120, the accommodation portion 190 needs to cover a movement range of the fixing portion 122. The movement range of the fixing portion 122 may be determined according to the movement position of the driving member 120 and the position of the fixing portion 122 on the driving member 120.

A specific position of the accommodation portion 190 corresponds to the position of the fixing portion 122 on the driving member 120. In the case that the fixing portion 122 is located at the side surface of the driving member 120, the accommodation portion 190 is disposed at the side surface of the upper cover 170. In the case that the fixing portion 122 is located on the bottom surface of the driving member 120, the accommodation portion 190 is disposed at the bottom surface of the lower cover 160.

As an example, the driving member 120 is provided with a pair of fixing portions 122 that are located at an upper side and a lower side of the driving member 120, respectively. Each of the upper cover 170 and the lower cover 160 is provided with an accommodation portion 190 corresponding to a respective one of the fixing portions 122. When the driving member 120 slides to any position, the fixing portion 122 is placed in the accommodation portion 190.

In some embodiments, the first position-limiting structure 162 comprises a plurality of locking members 164. Each of the plurality of locking members 164 has a socket 163. The second position-limiting structure 171 comprises a plurality of second snaps 172 formed at a side surface of the upper cover 170. Each of the plurality of second snaps 172 is snapped in the socket 163 when the upper cover 170 is fitted onto the lower cover 160.

In some embodiments, the second snap 172 may be a protrusion having an inclined surface that extends obliquely inwards from top to bottom, and a top surface of the protrusion is a horizontal surface. The locking member 164 is a square frame, and the socket 163 is formed at a central part of the square frame. In the process that the upper cover 170 is fitted onto the lower cover 160 downwards, an upper part of the square frame moves along the inclined surface and bends outwards. After the upper part of the square frame moves to a top of the inclined surface and is separated from the inclined surface, the bending of the upper part is restored, and the upper part is snapped on the top surface of the protrusion. The protrusion is located in the socket 163. Meanwhile, the upper cover 170 and the lower cover 160 are fitted closely. Since the protrusion is not easy to be separated from the socket 163 after being snapped in the socket 163, the connection between the upper cover 170 and the lower cover 160 is stable.

With continued reference to FIG. 5 to FIG. 8, an embodiment of the present disclosure further provides a cooking appliance 200, comprising the moisture removal assembly 100 according to any one of the above embodiments. The moisture removal assembly 100 is mounted on an outer side of a chamber of the cooking appliance 200 and located at an end of an openable/closable side of an oven door 210.

In some embodiments, the cooking appliance may be a steam oven, and the moisture removal assembly 100 may be mounted on the front panel 220 of the chamber. In the case that the oven door 210 is opened from its upper side, the moisture removal assembly 100 may be disposed at a position corresponding to an upper left corner or an upper right corner of the oven door 210. In the case that the oven door 210 is opened from its right side, the moisture removal assembly 100 may be disposed at a position corresponding to a lower right corner or an upper right corner of the oven door 210. For the specific structure of the moisture removal assembly 100, reference can be made to the above embodiments, and details are omitted herein.

According to the cooking appliance 200 of the present disclosure, the oven door 210 may be pushed open by the moisture removal assembly 100 when moisture removal is needed. When the user closes the door in the door-pushing state, the driving member 120 will be pushed to slide, which avoids the damage to the moisture removal assembly 100 or the oven door 210. Moreover, after the user releases the hand, the elastic member 140 pushes the driving member 120 out again, enabling the oven door 210 to be reopened for moisture removal. In other embodiments of the present disclosure, the cooking appliance 200 may also adopt the technical solutions in the above embodiments, which also have corresponding technical effects.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "and/or" throughout the specification and claims indicates at least one of the objects associated with "and/or". The character "/" generally indicates that the associated objects before and after the character are in an "or" relationship.

In the description of the present disclosure, it should be understood that, the orientation or the position indicated by terms such as "over", "below", "front", "rear", "left", "right", "vertical", "horizontal", "top", "bottom", "inner", and "outer" should be construed to refer to the orientation and the position as illustrated in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In the description of the present disclosure, the first feature "on" or "under" the second feature may mean that the first feature is in direct contact with the second feature, or the first and second features are in indirect contact through another feature between the first and second features.

In the description of the present disclosure, the first feature "above" the second feature means that the first feature is directly above or obliquely above the second feature, or simply means that the first feature is at a higher level than the second feature.

Throughout this specification, description with reference to "an embodiment", "some embodiments", "an illustrative embodiment", "an example", "a specific example", "some examples", or the like means that a particular feature, structure, material, or characteristic described in connection with the embodiment or example is comprised in at least one embodiment or example of the present disclosure. The appearances of the above phrases in various places throughout this specification are not necessarily referring to the same embodiment or example of the present disclosure. Further, the particular features, structures, materials, or characteristics described here may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A moisture removal assembly for a cooking appliance, the moisture removal assembly comprising:
a bearing member connected to the cooking appliance;
a driving member slidably mounted on the bearing member;
a push rod connected to the driving member, wherein the driving member is configured to drive the push rod to move towards an oven door of the cooking appliance, to enable the oven door to be pushed open; and
an elastic member connected to the driving member and mounted on the bearing member along a sliding path of the driving member.

2. The moisture removal assembly according to claim 1, wherein the bearing member comprises a housing having a cavity and a first opening in communication with the cavity, the driving member being located in the cavity, and the driving member being configured to drive the push rod to protrude through the first opening.

3. The moisture removal assembly according to claim 2, wherein the housing further has a snap groove and a fixing hole that surround the first opening, the fixing hole being configured to receive a screw for connecting the cooking appliance, and wherein the moisture removal assembly further comprises:
a mounting cover configured to be mounted on the cooking appliance, the mounting cover having a first through hole, a second through hole, and a first snap, wherein the first snap is snapped in the snap groove, wherein the first through hole is aligned to the first opening, and wherein the second through hole is aligned to the fixing hole.

4. The moisture removal assembly according to claim 2 or 3, wherein the housing comprises:
a lower cover having a sliding groove and a first position-limiting structure, the driving member being disposed in the sliding groove; and
an upper cover having a second position-limiting structure, wherein the cavity is defined by the lower cover and the upper cover fitted onto the lower cover, wherein the sliding groove is formed in the cavity, and wherein the first position-limiting structure and the second position-limiting structure cooperate to form a locking structure to prevent separation of the upper cover from the lower cover.

5. The moisture removal assembly according to claim 4, wherein:
the driving member is provided with an insertion piece;
the upper cover and/or the lower cover has a second opening; and
the insertion piece extends to the outside through the second opening when the driving member slides to any position.

6. The moisture removal assembly according to claim 4 or 5, wherein:
the driving member is provided with a fixing portion;
the upper cover and/or the lower cover is formed with an accommodation portion protruding outwards at a part of the upper cover and/or the lower cover; and
the fixing portion is placed in the accommodation portion when the driving member slides to any position.

7. The moisture removal assembly according to any one of claims 4 to 6, wherein:
the first position-limiting structure comprises a plurality of locking members, the plurality of locking members having a socket; and
the second position-limiting structure comprises a plurality of second snaps formed at a side surface of the upper cover, the plurality of second snaps being snapped in the socket when the upper cover is fitted onto the lower cover.

8. The moisture removal assembly according to any one of claims 1 to 7, wherein the driving member is a wax motor.

9. The moisture removal assembly according to any one of claims 1 to 8, wherein the elastic member is a spring.

10. A cooking appliance, comprising a moisture removal assembly according to any one of claims 1 to 9, wherein the moisture removal assembly is mounted on an outer side of a chamber of the cooking appliance and located at an end of an openable/closable side of the oven door.
